# EUROPEAN PATENT SPECIFICATION

(11) **EP 4 342 802 B1**
(45) Date of publication and mention of the grant of the patent: **29.10.2025**
(21) Application number: 23198598.7
(22) Date of filing: 20.09.2023
(51) Int. Cl.: B64D 45/00, B64D 45/04, B64D 45/08, G06V 20/50, G06V 20/56, G06V 20/60, G06V 20/64, G06V 20/70, G08G 5/00, G01C 23/00, G06V 20/58, G08G 5/21, G08G 5/54

(54) **PILOT ALERTING OF DETECTED RUNWAY ENVIRONMENT**
PILOTWARNUNG EINER ERKANNTEN LANDEBAHNUMGEBUNG
ALERTE PILOTE D'ENVIRONNEMENT DE PISTE DÉTECTÉ

(30) Priority: 26.09.2022 US 202217953161
(43) Date of publication of application: 27.03.2024
(73) Proprietor: Rockwell Collins, Inc., Cedar Rapids, IA 52498 (US)
(72) Inventor: LAHR, Weston J., Sherwood, OR (US); RADEMAKER, Richard M., Cedar Rapids, IA (US); PERKINS, Aaron, Seattle, WA (US); WILSON, Brandon E., Portland, OR (US); LJUNGKRANTZ-LAHR, Charlotte S., Sherwood, OR (US)
(74) Representative: Dehns

(56) References cited:
- FR-A1- 3 103 050
- US-A1- 2013 188 049
- US-A1- 2017 214 904
- US-B1- 9 174 746

## Description

### BACKGROUND

Currently, on an instrument approach (with or without an enhanced flight vision system (EFVS)), pilots use flight instruments down to a decision altitude (DA) (e.g., often 200 feet above the runway elevation). At DA, the pilot is required to acquire 'visual references' (e.g., listed in 14 CFR 91.175), meaning a list of identifiable features lined up with the runway (e.g., typically, approach lights of the approach lighting system (ALS)). If the visual references are observed, then the pilot may continue the approach as the pilot has additional confirmation of their alignment with the runway and is safe to proceed.

In low visibility conditions (e.g., a typical CFR 91.175 instrument landing system (ILS) approach or an enhanced vision system (EVS) assisted EFVS approach pursuant to 14 CFR 91.176), the pilot is regularly switching between following their instruments and searching out the window (or HUD in the EFVS situation) to look for approach lights. This is a high-workload situation for a pilot because each time the pilot checks out the window, the pilot is not sure if the approach lights are visible yet so they must search for some time not knowing if there is anything to be seen. If they eventually give up (e.g., because the pilot has spent too much time searching), the pilot then rechecks the instruments and looks up again to look for the approach lights. By looking for approach lights that may or may not be viewable, it is difficult to know how long to look before giving up, and the pilot does not know if the pilot didn't identify the approach lights because the approach lights were not viewable or because the pilot did not look in the correct place. FR 3 103 050 relates to a method and device for assisting aircraft landing in conditions of poor visibility. US 2017/214904 relates to a cockpit display system and method.

### SUMMARY

In one aspect, embodiments of the inventive concepts disclosed herein are directed to a system. The system is provided in claim 1.

In a further aspect, embodiments of the inventive concepts disclosed herein are directed to a method. The method is provided in claim 12.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a system according to the inventive concepts disclosed herein.
FIG. 2A is a view of a head-up display device of the system of FIG. 1 according to the inventive concepts disclosed herein.
FIG. 2B is a view of a head wearable display device of the system of FIG. 1 according to the inventive concepts disclosed herein.
FIG. 3 is another view of the system of FIG. 1 according to the inventive concepts disclosed herein.
FIG. 4 is an exemplary view of the cockpit of the aircraft of FIG. 1 according to the inventive concepts disclosed herein.
FIG. 5 shows graphs of pilot tasking over time according to the inventive concepts disclosed herein.
FIG. 6 is an exemplary view of a display device of the system of FIG. 1 according to the inventive concepts disclosed herein.
FIG. 7 is an exemplary view of a display device of the system of FIG. 1 according to the inventive concepts disclosed herein.
FIG. 8 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a method and a system including at least one camera and at least one processor implemented in an aircraft, wherein the at least one processor may be configured to output an annunciation instruction configured to cause an annunciation to a pilot that visual references (e.g., approach lights) have been identified (e.g., detected) by the at least one processor.

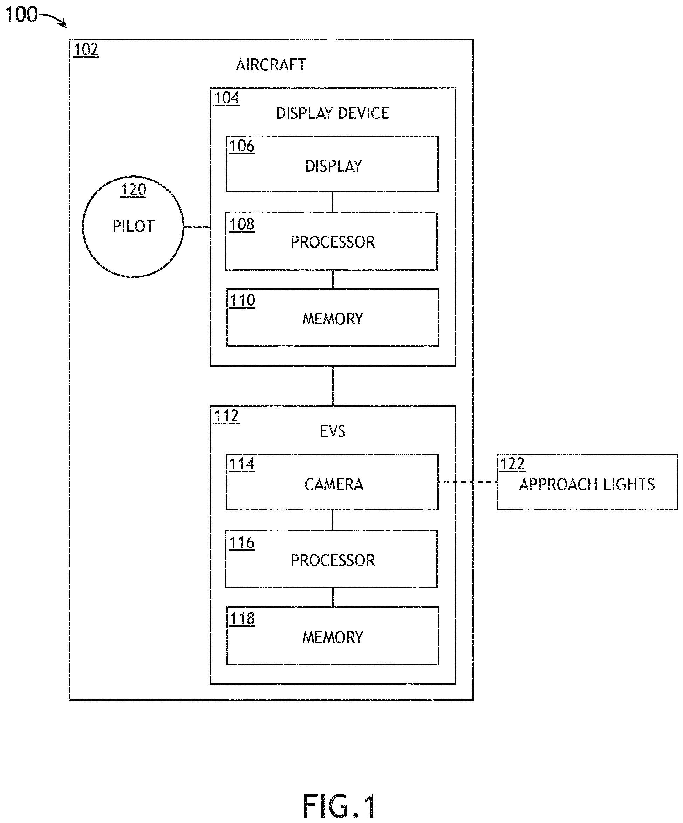

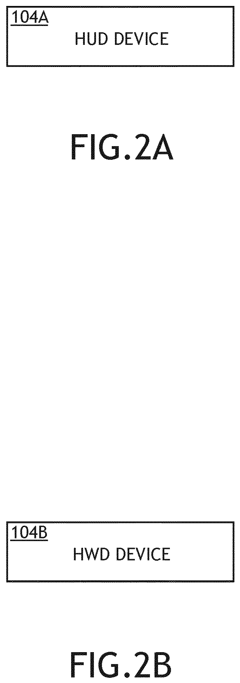

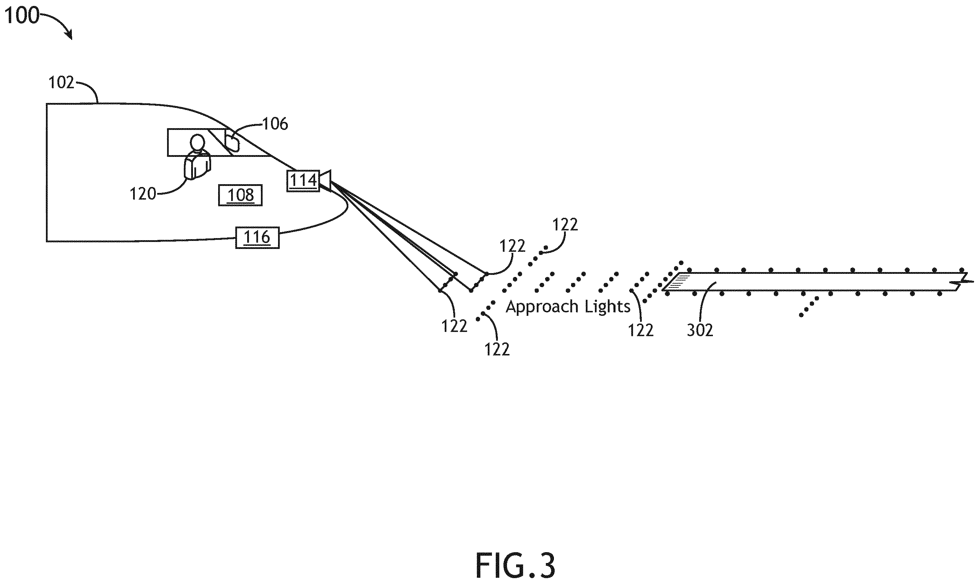

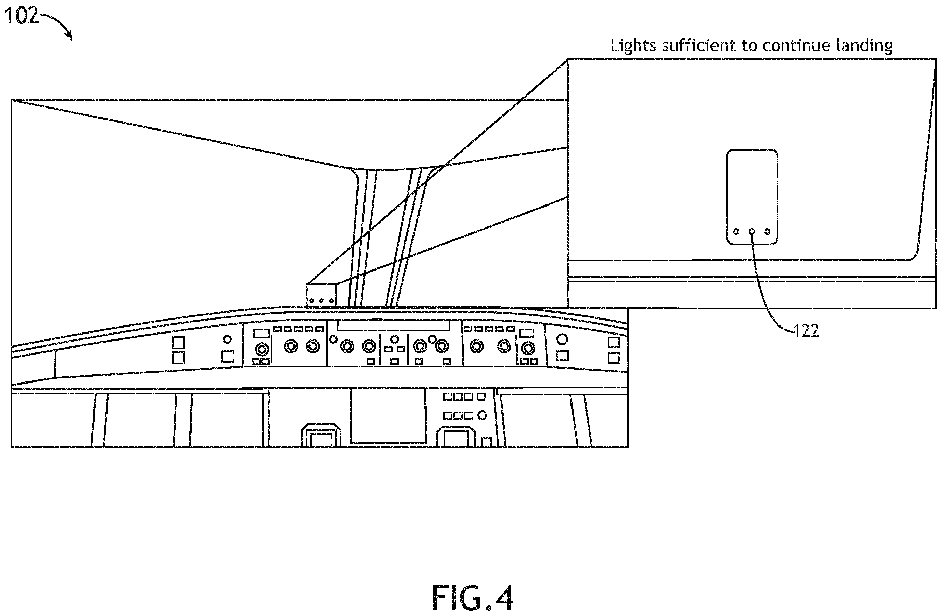

Referring now to FIGS. 1, 2A, 2B, 3, 4, 6, and 7 an exemplary embodiment of a system 100 according to the inventive concepts disclosed herein is depicted. The system 100 may be implemented as any suitable system, such as at least one vehicle (e.g., an aircraft 102, an automobile, a train, a watercraft, a spacecraft, or a submersible vehicle) or an environment including the at least one vehicle, visual references (e.g., approach lights 122), and at least one runway 302. For example, as shown in FIGS. 1, 2A, 2B, and 3, the system 100 may include an aircraft 102. For example, the aircraft 102 may include a display device 104 (e.g., a head-up display (HUD) device 104A, or a head wearable display (HWD) device 104B), at least one enhanced vision system (EVS) 112, and/or a pilot, some or all of which may be communicatively coupled at any given time.

In some embodiments, the display device 104 (e.g., the HUD device 104A, or the HWD device 104B (e.g., a helmet-mounted display (HMD) device or a glasses display device, or a Head-Down Display (HDD)) may include at least one display 106, at least one processor 108, and/or at least one memory 110, some or all of which may be optically and/or communicatively coupled at any given time. In some embodiments, the display device 104 may be implemented in a vehicle cockpit.

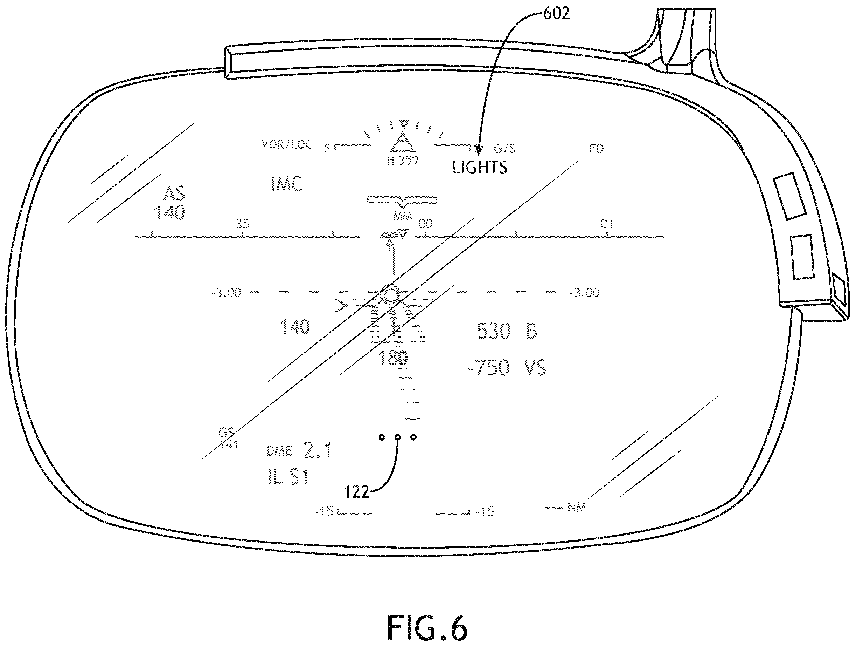

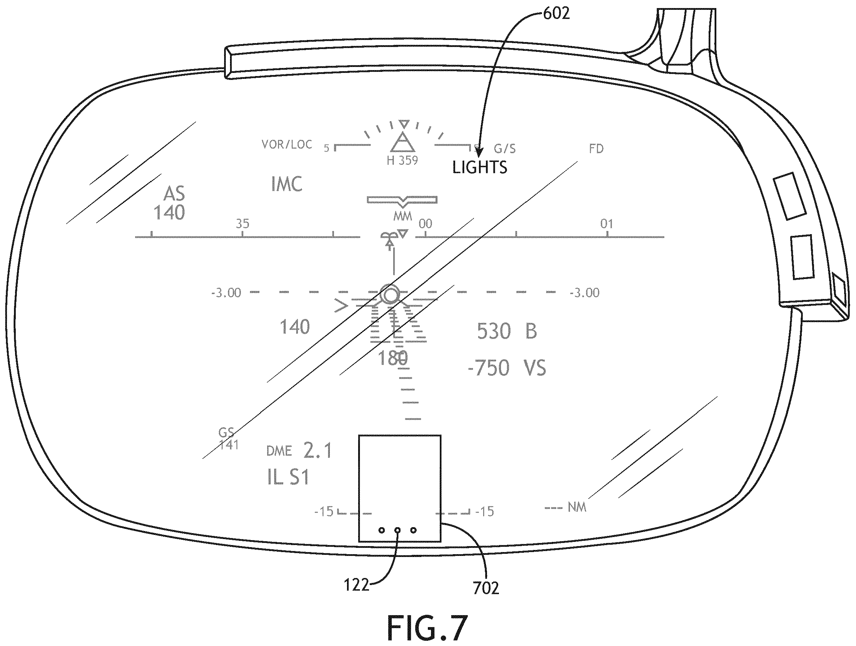

The display 106 (e.g., a combiner for the HUD device 104A) may be implemented as any suitable display device or element. For example, the display may be configured to display, to a pilot 120, EVS images of an environment in front of the cockpit of the aircraft 102. In some embodiments, the EVS images may be aligned with a field of view of the pilot. In some embodiments, the display 106 may be configured to display the visual references (e.g., approach lights 122). In some embodiments, the display 106 may be configured to display a visible annunciation (e.g., 602 of FIGS. 6 and 7) to the pilot 120. In some embodiments, the display 106 may be configured to display a location (e.g., which may be depicted as a box 702 around the approach lights of FIG. 7) of the visual references (e.g., approach lights 122) in a field of view of the pilot 120.

The at least one processor 108 may be implemented as any suitable processor(s), such as at least one general purpose processor, at least one central processing unit (CPU), at least one image processor, at least one graphics processing unit (GPU), and/or at least one special purpose processor configured to execute instructions for performing (e.g., collectively performing if more than one processor) any or all of the operations disclosed throughout. In some embodiments, the processor 108 may be communicatively coupled to the display 106 and/or the EVS 112. For example, the processor 108 may be configured to: receive image data and/or annunciation instructions from the EVS 112; generate and/or output image data to the display 106 and/or, for example, based on the annunciation instruction from the EVS 112; and/or generate and/or output other image data, which may include vehicle operation (e.g., aircraft operation) information, symbology, navigation information, tactical information, and/or sensor information to the display 106.

The EVS 112 may be implemented as any suitable computing device. The EVS 112 may include at least one camera 114, at least one processor 116, and/or at least one memory 118, some or all of which may be communicatively coupled at any given time.

The camera 114 may be configured to capture images external to the aircraft 102, such as images of views in front of the cockpit of the aircraft 102.

The at least one processor 116 may be implemented as any suitable processor(s), such as at least one general purpose processor, at least one central processing unit (CPU), at least one image processor, at least one graphics processing unit (GPU), and/or at least one special purpose processor configured to execute instructions for performing (e.g., collectively performing if more than one processor) any or all of the operations disclosed throughout. For example, the processor 116 may be configured to: receive the images from the at least one camera 114; identify (e.g., detect) visual references (e.g., approach lights 122) in at least one of the images; generate and/or output image data to the display device 104; and/or generate and/or output other image data, which may include vehicle operation (e.g., aircraft operation) information, symbology, navigation information, tactical information, and/or sensor information to the to the multiple display device.

In some embodiments, at least one processor (e.g., 108 and/or 116) may be configured (e.g., collectively configured to perform, if more than one processor) to any of the operations disclosed throughout. For example, the at least one processor (e.g., 108 and/or 116) may be configured to: receive the images from the at least one camera 114; identify visual references (e.g., approach lights 122) in at least one of the images; and/or output an annunciation instruction configured to cause an annunciation (e.g., at least one of an audible annunciation or a visible annunciation, which may be displayed by the display device 104) to a pilot 120 that the visual references (e.g., approach lights 122) have been identified by the at least one processor.

For example, the at least one processor (e.g., 108 and/or 116) may be further configured to: begin to attempt to identify the visual references (e.g., approach lights) in the at least one of the images when the aircraft is within a predetermined height above a decision altitude.

The at least one processor (e.g., 108 and/or 116) is further configured to: begin to attempt to identify the visual references (e.g., approach lights) in the at least one of the images based at least on information associated with a flap and/or landing gear configuration.

For example, the at least one processor (e.g., 108 and/or 116) may be further configured to: narrow a search scope based on information obtained by at least one of an inertial reference system (IRS), an instrument landing system (ILS), or a global positioning system (GPS), the search scope being a search for the visual references (e.g., approach lights) and being associated with identifying the visual references (e.g., approach lights) in the at least one of the images when the aircraft is within a predetermined height above a decision altitude.

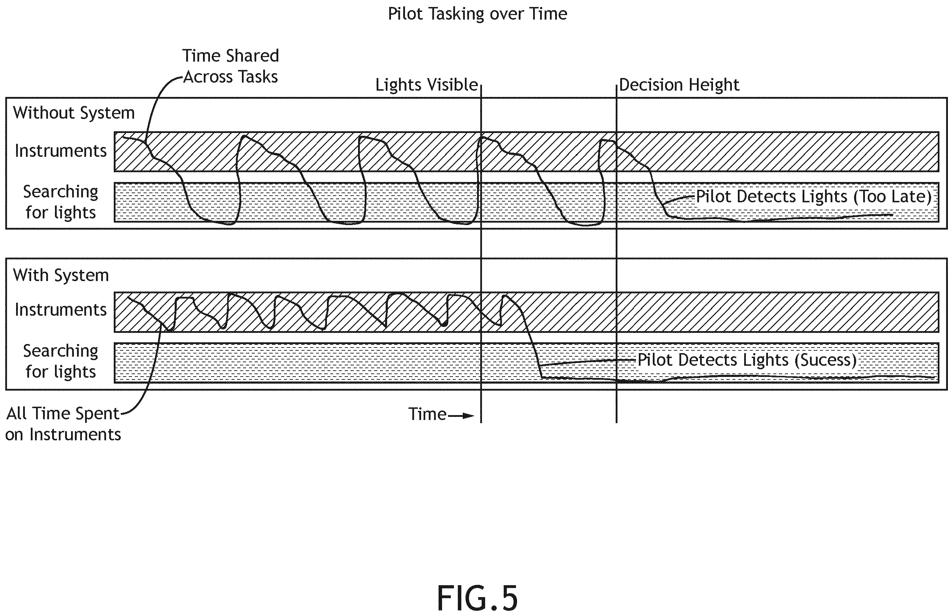

Referring now to FIG. 5, exemplary graphs of pilot tasking time are according to the inventive concepts disclosed herein is depicted.

For example, the top graph shows existing situation without the annunciation of embodiments disclosed herein. The top graph shows that the pilot frequently switches between looking at the instruments and searching for visual references (e.g., approach lights). Once the visual references (e.g., approach lights) are visible, the pilot does not know that the lights are visible, so the pilot may continue to frequently switch between looking at the instruments and searching for lights, and as such, the pilot may resultingly be unable to identify the visual references (e.g., approach lights) before reaching the decision altitude, which results in the pilot having to abort the approach.

On the other hand, the bottom graph shows a situation using the annunciation of embodiments disclosed herein. As can be seen, the pilot can spend their time focused on the instruments until the system annunciates that the visual references (e.g., approach lights) are visible. Once the pilot knows the lights are visible, the pilot can As such, some embodiments may improve safety by reducing pilot workload by allowing the pilot to focus on instruments longer, while at the same time increasing the frequency of successfully identifying visual references (e.g., approach lights) so that approaches can be completed. Additionally, some embodiments may be used without further certification because the pilot still may be required to visually identify the approach light themselves.

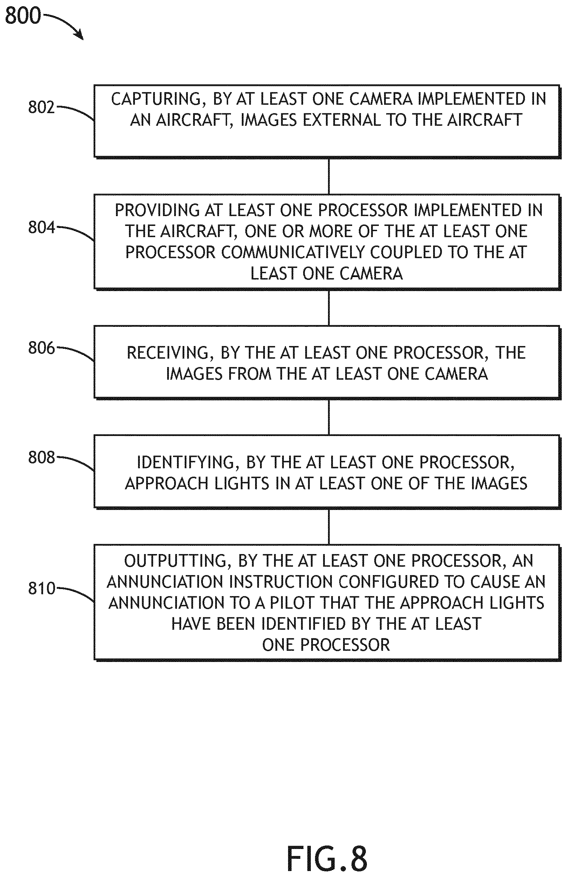

Referring now to FIG. 8, an exemplary embodiment of a method 800 according to the inventive concepts disclosed herein includes at least the following steps. Additionally, for example, some embodiments may include performing one more instances of the method 800 iteratively, concurrently, and/or sequentially. Additionally, for example, at least some of the steps of the method 800 may be performed in parallel and/or concurrently. Additionally, in some embodiments, at least some of the steps of the method 800 may be performed non-sequentially. Additionally, in some embodiments, at least some of the steps of the method 800 may be performed in sub-steps of providing various components.

A step 802 includes capturing, by at least one camera implemented in an aircraft, images external to the aircraft.

A step 804 includes providing at least one processor implemented in the aircraft, one or more of the at least one processor communicatively coupled to the at least one camera.

A step 806 includes receiving, by the at least one processor, the images from the at least one camera.

A step 808 includes identifying, by the at least one processor, visual references (e.g., approach lights) in at least one of the images.

A step 810 includes outputting, by the at least one processor, an annunciation instruction configured to cause an annunciation to a pilot that the visual references (e.g., approach lights) have been identified by the at least one processor.

Further, the method 800 may include any of the operations disclosed throughout. The method 800 also includes the step of the at least one processor beginning to attempt to identify the visual references in the at least one of the images based at least on information associated with a flap and/or landing gear configuration.

As used throughout and as would be appreciated by those skilled in the art, "at least one non-transitory computer-readable medium" may refer to as at least one non-transitory computer-readable medium (e.g., e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may, to the extent that they fall within the scope of the claims, include the steps described herein, that may be carried out in any desired order and two or more of the steps may be carried out simultaneously with one another. Two or more of the steps disclosed herein may be combined in a single step, and in some embodiments, one or more of the steps may be carried out as two or more sub-steps, to the extent that they fall within the scope of the claims. Further, other steps or sub-steps may be carried in addition to, or as substitutes to one or more of the steps disclosed herein, to the extent that they fall within the claims.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are within the scope of the claims.

## Claims

1. A system for an aircraft, the system comprising:
at least one camera (114) for being implemented in an aircraft, the at least one camera configured to capture images external to the aircraft; and
at least one processor (116) for being implemented in the aircraft, one or more of the at least one processor communicatively coupled to the at least one camera, the at least one processor configured to:
receive the images from the at least one camera;
identify visual references in at least one of the images; and
output an annunciation instruction configured to cause an annunciation to a pilot that the visual references have been identified by the at least one processor; **characterized in that**
the at least one processor (116) is further configured to begin to attempt to identify the visual references in the at least one of the images based at least on information associated with a flap and/or landing gear configuration.

2. The system of claim 1, wherein the annunciation is at least one of an audible annunciation or a visible annunciation.

3. The system of claim 2, wherein the annunciation is the visible annunciation, wherein the system further comprises a display device (104) configured to display the annunciation.

4. The system of claim 3, wherein the display device (104) is a head-up display (HUD) device.

5. The system of claim 3, wherein the display device (104) is a head wearable display (HWD) device.

6. The system of claim 3, wherein the display device (104) is configured to display a location of the visual references in a field of view of the pilot.

7. The system of claim 6, wherein the location of the visual references is depicted as a marker.

8. The system of claim 7, wherein the marker is a box around the visual references.

9. The system of any preceding claim, wherein the at least one processor is further configured to begin to attempt to identify the visual references in the at least one of the images when the aircraft is within a predetermined height above a decision altitude.

10. The system of any preceding claim, wherein the at least one processor (116) is further configured to narrow a search scope based on information obtained by at least one of an inertial reference system (IRS), an instrument landing system (ILS), or a global positioning system (GPS), the search scope being a search for the visual references and being associated with identifying the visual references in the at least one of the images when the aircraft is within a predetermined height above a decision altitude.

11. The system of any preceding claim, wherein the visual references are approach lights.

12. A method, comprising:
capturing, by at least one camera (114) implemented in an aircraft, images external to the aircraft,
providing at least one processor (116) implemented in the aircraft, one or more of the at least one processor communicatively coupled to the at least one camera;
receiving, by the at least one processor, the images from the at least one camera;
identifying, by the at least one processor, visual references in at least one of the images; and
outputting, by the at least one processor, an annunciation instruction configured to cause an annunciation to a pilot that the visual references have been identified by the at least one processor; **characterized in that**
the at least one processor (116) begins to attempt to identify the visual references in the at least one of the images based at least on information associated with a flap and/or landing gear configuration.

13. The method of claim 12, wherein the visual references are approach lights.

14. The method of claim 12 or 13, wherein the annunciation is at least one of an audible annunciation or a visible annunciation, and preferably wherein the annunciation is the visible annunciation, wherein the system further comprises a display device configured to display the annunciation.

## Patentansprüche

1. System für ein Luftfahrzeug, wobei das System Folgendes umfasst:
mindestens eine Kamera (114), die in einem Luftfahrzeug implementiert wird, wobei die mindestens eine Kamera dazu konfiguriert ist, Bilder außerhalb des Luftfahrzeugs aufzunehmen; und
mindestens einen Prozessor (116) zur Implementierung im Flugzeug, wobei einer oder mehrere der mindestens einen Prozessoren kommunikativ mit der mindestens einen Kamera gekoppelt sind und der mindestens eine Prozessor dazu konfiguriert ist:
Empfangen der Bilder von der mindestens einen Kamera;
Identifizieren visueller Referenzen in mindestens einem der Bilder; und
Ausgeben einer Ansageanweisung, die dazu konfiguriert ist, eine Ansage an einen Piloten zu veranlassen, dass die visuellen Referenzen durch den mindestens einen Prozessor identifiziert worden sind; **dadurch gekennzeichnet, dass**
der mindestens eine Prozessor (116) ist ferner dazu konfiguriert, mit dem Versuch zu beginnen, die visuellen Referenzen in dem mindestens einen der Bilder zu identifizieren, basierend auf mindestens Informationen, die einer Klappen- und/oder Fahrwerkskonfiguration zugeordnet sind.

2. System nach Anspruch 1, wobei es sich bei der Ansage um mindestens eine akustische oder sichtbare Ansage handelt.

3. System nach Anspruch **2,** wobei es sich bei der Ansage um die sichtbare Ansage handelt, wobei das System ferner eine Anzeigevorrichtung (104) umfasst, die dazu konfiguriert ist, die Ansage anzuzeigen.

4. System nach Anspruch 3, wobei die Anzeigevorrichtung (104) eine Head-up-Display-Vorrichtung (head-up display, HUD) ist.

5. System nach Anspruch 3, wobei die Anzeigevorrichtung (104) eine Head-Wearable-Display-Vorrichtung (head wearable display, HWD) ist.

6. System nach Anspruch 3, wobei die Anzeigevorrichtung (104) dazu konfiguriert ist, eine Position der visuellen Referenzen in einem Sichtfeld des Piloten anzuzeigen.

7. System nach Anspruch 6, wobei der Ort der visuellen Referenzen als Marker abgebildet ist.

8. System nach Anspruch 7, wobei der Marker ein Kasten um die visuellen Referenzen ist.

9. System nach einem der vorhergehenden Ansprüche, wobei der mindestens eine Prozessor ferner dazu konfiguriert ist, mit dem Versuch zu beginnen, die visuellen Referenzen in dem mindestens einen der Bilder zu identifizieren, wenn sich das Luftfahrzeug innerhalb einer vorbestimmten Höhe oberhalb einer Entscheidungshöhe befindet.

10. System nach einem der vorhergehenden Ansprüche, wobei der mindestens eine Prozessor (116) ferner dazu konfiguriert ist, einen Suchbereich basierend auf Informationen einzugrenzen, die von mindestens einem Inertialreferenzsystem (inertial reference system, IRS), einem Instrumentenlandesystem (instrument landing system, ILS) oder einem globalen Positionierungssystem (global positioning system, GPS) erlangt wurden, wobei der Suchbereich eine Suche nach den visuellen Referenzen ist und dem Identifizieren der visuellen Referenzen in dem mindestens einen der Bilder zugeordnet ist, wenn sich das Luftfahrzeug innerhalb einer vorbestimmten Höhe über einer Entscheidungshöhe befindet.

11. System nach einem der vorhergehenden Ansprüche, wobei die visuellen Referenzen Anfluglichter sind.

12. Verfahren, umfassend:
Aufnehmen von Bildern außerhalb des Luftfahrzeugs durch mindestens eine Kamera (114), die in einem Luftfahrzeug implementiert ist;
Bereitstellen mindestens eines in dem Luftfahrzeug implementierten Prozessors (116), wobei einer oder mehrere der mindestens einen Prozessoren kommunikativ mit der mindestens einen Kamera gekoppelt sind;
Empfangen der Bilder von der mindestens einen Kamera durch den mindestens einen Prozessor;
Identifizieren von visuellen Referenzen in mindestens einem der Bilder durch den mindestens einen Prozessor; und
Ausgeben einer Ansageanweisung durch den mindestens einen Prozessor, die dazu konfiguriert ist, eine Ansage an einen Piloten zu veranlassen, dass die visuellen Referenzen durch den mindestens einen Prozessor identifiziert worden sind; **dadurch gekennzeichnet, dass**
der mindestens eine Prozessor (116) dem Versuch zu beginnt, die visuellen Referenzen in dem mindestens einen der Bilder zu identifizieren, basierend auf mindestens Informationen, die einer Klappen- und/oder Fahrwerkskonfiguration zugeordnet sind.

13. Verfahren nach Anspruch 12, wobei die visuellen Referenzen Anfluglichter sind.

14. Verfahren nach Anspruch 12 oder 13, wobei die Ansage mindestens eine akustische Ansage oder eine sichtbare Ansage ist, und wobei die Ansage vorzugsweise die sichtbare Ansage ist, wobei das System ferner eine Anzeigevorrichtung umfasst, die zum Anzeigen der Ansage konfiguriert ist.

## Revendications

1. Système pour un aéronef, le système comprenant :
au moins une caméra (114) destinée à être mise en œuvre dans un aéronef, l'au moins une caméra étant configurée pour capturer des images externes à l'aéronef ; et
au moins un processeur (116) destiné à être mis en œuvre dans l'aéronef, un ou plusieurs de l'au moins un processeur étant couplés de manière communicative à l'au moins une caméra, l'au moins un processeur étant configuré pour :
recevoir l'image de l'au moins une caméra ;
identifier les références visuelles dans au moins une des images ; et
émettre une instruction d'annonce configurée pour provoquer une annonce à un pilote que les références visuelles ont été identifiées par l'au moins un processeur ; **caractérisé en ce que** l'au moins un processeur (116) est également configuré pour commencer à tenter d'identifier les références visuelles dans l'au moins une des images sur la base au moins d'informations associées à une configuration de volet et/ou de train d'atterrissage.

2. Système selon la revendication 1, dans lequel l'annonce est au moins l'une d'une annonce sonore ou d'une annonce visible.

3. Système selon la revendication 2, dans lequel l'annonce est l'annonce visible, dans lequel le système comprend également un dispositif d'affichage (104) configuré pour afficher l'annonce.

4. Système selon la revendication 3, dans lequel le dispositif d'affichage (104) est un dispositif d'affichage pouvant être porté sur la tête (HWD).

5. Système selon la revendication 3, dans lequel le dispositif d'affichage (104) est un dispositif d'affichage pouvant être porté sur la tête (HWD).

6. Système selon la revendication 3, dans lequel le dispositif d'affichage (104) est configuré pour afficher un emplacement des références visuelles dans un champ de vision du pilote.

7. Système selon la revendication 6, dans lequel l'emplacement des références visuelles est représenté sous la forme d'un marqueur.

8. Système selon la revendication 7, dans lequel le marqueur est une boîte autour des références visuelles.

9. Système selon une quelconque revendication précédente, dans lequel l'au moins un processeur est également configuré pour commencer à tenter d'identifier les références visuelles dans l'au moins une des images lorsque l'aéronef se trouve à une hauteur prédéterminée au-dessus d'une altitude de décision.

10. Système selon une quelconque revendication précédente, dans lequel l'au moins un processeur (116) est également configurés pour restreindre une portée de recherche sur la base d'informations obtenues par au moins l'un d'un système de référence inertielle (IRS), d'un système d'atterrissage aux instruments (ILS) ou d'un système de positionnement global (GPS), la portée de recherche étant une recherche des références visuelles et étant associée à l'identification des références visuelles dans l'au moins une des images lorsque l'aéronef se trouve à une hauteur prédéterminée au-dessus d'une altitude de décision.

11. Système selon une quelconque revendication précédente, dans lequel les références visuelles sont des feux d'approche.

12. Procédé, comprenant :
la capture, par au moins une caméra (114) mise en œuvre dans un aéronef, des images extérieures à l'aéronef ;
la fourniture d'au moins un processeur (116) mis en œuvre dans l'aéronef, un ou plusieurs de l'au moins un processeur étant couplé de manière communicative à l'au moins une caméra ;
la réception, par l'au moins un processeur, des images provenant de l'au moins une caméra ;
l'identification, par l'au moins un processeur, des références visuelles dans au moins une des images ; et
l'émission, par l'au moins un processeur, d'une instruction d'annonce configurée pour provoquer une annonce à un pilote que les références visuelles ont été identifiées par l'au moins un processeur ; **caractérisé en ce que**
l'au moins un processeur (116) commence à tenter d'identifier les références visuelles dans l'au moins une des images sur la base au moins d'informations associées à une configuration de volet et/ou de train d'atterrissage.

13. Procédé selon la revendication 12, dans lequel les références visuelles sont des feux d'approche.

14. Procédé selon la revendication 12 ou 13, dans lequel l'annonce est au moins l'une d'une annonce sonore ou d'une annonce visible, et de préférence dans lequel l'annonce est l'annonce visible, dans lequel le système comprend également un dispositif d'affichage configuré pour afficher l'annonce.
